(19) Europäisches Patentamt

European Patent Office

Office européen des brevets

(11) Veröffentlichungsnummer: **0 332 980 B1**

(12) **EUROPÄISCHE PATENTSCHRIFT**

(45) Veröffentlichungstag der Patentschrift: **22.12.93**

(21) Anmeldenummer: **89103945.5**

(22) Anmeldetag: **07.03.89**

(51) Int. Cl.⁵: **C08L 67/00**, C08G 63/20, D06M 15/507

Die Akte enthält technische Angaben, die nach dem Eingang der Anmeldung eingereicht wurden und die nicht in dieser Patentschrift enthalten sind.

(54) **Verfahren zur Herstellung von wässrigen Polyester-Dispersionen und ihre Verwendung.**

(30) Priorität: **17.03.88 DE 3808882**

(43) Veröffentlichungstag der Anmeldung: **20.09.89 Patentblatt 89/38**

(45) Bekanntmachung des Hinweises auf die Patenterteilung: **22.12.93 Patentblatt 93/51**

(84) Benannte Vertragsstaaten: **AT BE CH DE ES FR GB IT LI**

(56) Entgegenhaltungen: US-A- 4 035 531 US-A- 4 268 645

WATER-SOLUBLE POLYMERS Recent Developments von Yale L. Meltzer, Seite 283-285, NOYES DATA CORPORATION Park Ridge, New Jersey, U.S.A., 1979

(73) Patentinhaber: **BASF Aktiengesellschaft Carl-Bosch-Strasse 38 D-67063 Ludwigshafen(DE)**

(72) Erfinder: **Brueckmann, Ralf, Dr. In den Bannzaeunen 17 D-6701 Goennheim(DE)** Erfinder: **Leitner, Heinz Im Steg 64 D-6802 Ladenburg(DE)** Erfinder: **Schoepke, Holger, Dr. Dieselstrasse 16 D-6700 Ludwigshafen(DE)**

EP 0 332 980 B1

**Beschreibung**

In der Textilindustrie ist es bekannt, aus einer Vielzahl von Einzelfäden bestehende Textilgarne, die im Webprozeß als Kettgarne verwendet werden, mit einem Schlichtemittel zu behandeln, das die Einzelfäden der Garne miteinander verbindet. Die Behandlung mit einem Schlichtemittel verstärkt und verfestigt die Kettgarne und macht sie für den Webprozeß abriebfester. Filamentgarne, insbesondere die feintritrigen aus Einzelfilamenten mit einem Titer im Bereich 4 bis kleiner 1 dtex, benötigen für die Verarbeitung in der Weberei einen ganz besonderen mechanischen Schutz, um auf Hochleistungswebmaschinen zerstörungsfrei verwebt werden zu können. Diesen Schutz erzielt man durch Schlichten der Kettgarne mit speziellen synthetischen Polymeren. Insbesondere glattes Filamentgarn kann heutzutage erfolgreich nur noch mit Schlichten allerhöchster Klebkraft und Abriebfestigkeit geschlichtet werden.

Die meisten Schlichten, die vor wenigen Jahren noch dem Stand der Technik genügten, müssen heute für diesen Bereich, in dem eine hohe Produktivität gefordert wird, als überholt und nicht ausreichend abriebfest eingestuft werden.

Für eine gute Filamentschlichte müssen heute folgende Anforderungen erfüllt werden:

1. in der Schlichterei
   - Einsetzbarkeit auf Einzelfadenschlichtmaschinen bei Geschwindigkeiten bis 500 m/min; dies bedingt niedrigviskose, schaumarme, scherstabile Schlichteflotten
   - einfache Flottenzubereitung, niedrige, vom Schergefälle unabhängige Viskosität
   - gutes Netzen der Filamente, leichte und schnelle Penetration
   - gute Verträglichkeit mit den Präparationsölen der Garne
   - kein Verkleben der Kettfäden unter Einfluß von Feuchtigkeit und/oder Präparationsölen oder Nachölprodukten

2. in der Weberei:
   - Einsetzbarkeit auf allen Webmaschinen einschließlich der Wasserdüsenwebmaschinen
   - klimastabiler, auch bei feuchtem Klima stabiler, abriebfester Schlichtefilm
   - hoher Fadenschluß, Fadenhaftung
   - hoher Webnutzeffekt bei geringer Auftragsmenge

3. in der Vorbehandlung:
   - leichte Auswaschbarkeit
   - Verträglichkeit auch bei Wasserhärte
   - Alkaliunempfindlichkeit
   - guter Warenausfall, d.h. unbeeinflußter Warengriff und gute Saugfähigkeit des Gewebes nach der Entschlichtung
   - keine Abwasserprobleme, hohe Eliminierbarkeit und Mineralisierbarkeit.

Die Erfüllung dieser Anforderungen kann mit objektiven Meßmethoden überprüft werden.

Danach gibt es bislang kein Filamentschlichtemittel, insbesondere nicht für glattes Filament, das allen Anforderungen gerecht wird. Es müssen häufig Kompromisse geschlossen werden. Verbesserungen auf der einen Seite führen zur Verschlechterung auf der anderen:

So sind z.B. extrem klimaunempfindliche Schlichtemittel wegen ihrer guten Wasserfestigkeit häufig schwer auswaschbar. Da sie aus hydrophoben Bausteinen bestehen, besitzen sie meist eine höhere Empfindlichkeit gegenüber den Öl-Komponenten in der Garnpräparation; die damit geschlichteten Garne neigen stärker zu elektrostatischer Aufladung. Die Schlichteflotten neigen stärker zu Hautbildung.

Gegenüber Präparationsöl- und Nachölprodukten unempfindliche Schlichtemittel enthalten mehr hydrophile bzw. polare Gruppen. Sie weisen in der Regel eine bessere Auswaschbarkeit und ein besseres antielketrostatisches Verhalten auf. Dieser Vorteil muß mit dem Nachteil der höheren Klimaempfindlichkeit erkauft werden. Häufig sind diese Schlichtemittel auch nicht mehr für Wasserdüsenwebmaschinen geeignet.

Eine Erweichung von Schlichtefilmen durch Temperatur, Feuchtigkeit und/oder Garnpräparationsöl- und Nachölprodukt kann durch Einstellung einer höheren Filmhärte bei der Synthese von Schlichtemitteln kompensiert werden. Härte und Klebkraft der Schlichtefilme sind jedoch miteinander weitgehend gekoppelt. D.h. bei annähernd gleichem Aufbau des Schlichtemittels besitzt der härtere Film eine geringere Klebkraft als der weichere. Dies bedeutet, daß je nach Einwirkung von Feuchtigkeit (Klima), Präparationsöl, Nachölprodukt, gegebenenfalls weiteren Zusätzen zur Schlichteflotte und Temperatur die Schlichte mehr oder weniger erweicht. Die Klebkraft der Schlichte schwankt bei unterschiedlichem Webklima und unter dem Einfluß der zahlreichen, verschiedenen, je nach Garntyp zusammengesetzten, Präparationsölen oder Spinnavivagen.

Die Praxis hat bislang gezeigt, daß es schwer ist - aus oben genannten Gründen - mit einer einzigen Filamentschlichte für das ganze Filamentgebiet, zumindest für eine Garnklasse (z.B. nur Polyester), auszukommen.

Die meisten Schlichtemittelhersteller bieten daher gleich mehrere Schlichten für das Schlichten von Filament an. Es erfolgt eine Anpassung an den jeweiligen Garntyp mit entsprechender Präparationsauflage, an Klima und Websaalbedingungen der Länder, in denen gewebt werden soll und an den jeweiligen Webmaschinentyp.

Für das Schlichten von Polyester-Filament sind Acrylat- bzw. Methacrylat-Copolymere und Polyesterkondensationsprodukte besonders geeignet. Jede Produktklasse hat ihre besonderen Vorzüge:

Acrylat- bzw. Methacrylatcopolymere sind weniger alkali-, salz- bzw. polyelektrolytempfindlich als Polyesterharze. Sie sind daher besonders problemlos auswaschbar. Auch bei der Flottenzubereitung in der Schlichterei sind weniger Unverträglichkeitsreaktionen zu erwarten. Acrylat- bzw. Methacrylatcopolymere, die zum Schlichten von Kettfäden auf Wasserdüsenwebstühlen geeignet sind, sind feuchtigkeitsunempfindlicher als Polyesterharze nach dem Stand der Technik. Polyesterharze sind dagegen - wenn sie nicht zu hoher Feuchtigkeit ausgesetzt sind - abriebfester und bewirken meist einen besseren Fadenschluß. Besonders ausgeprägt zeigt sich dies bei glattem Polyesterfilamentgarn.

Um den gleichen Webnutzeffekt bei einem Polyesterfilament (z.B. PES-Filament glatt dtex 70 f 24) zu erreichen, benötigt man beispielsweise 3.5 Gew.% einer Polyesterschlichte oder 5,5 Gew.% einer Poly-(Meth)-Acrylat-Schlichte. D.h. auch bei Vergleich zweier guter Produkte nach dem Stand der Technik ergibt sich in diesem Beispiel ein Wirkstoffverhältnis von 1 : 1,6.

Die Avivageölempfindlichkeit der Polyesterharze, bei denen aromatische Dicarbonsäuren bzw. ihre Natriumsulfonatderivate als Bausteine zur Synthese verwendet werden, ist weniger ausgeprägt als bei Acrylatcopolymeren. Für den Bereich der glatten Filamentgarne werden für schützenlose Hochleistungswebmaschinen Polyesterschlichten auf Basis von Kondensationsprodukten aus Isophthalsäure (-estern) und/oder Terephthalsäure (-estern), Diolen (teilweise auch Polyolen) und sulfonatgruppenhaltigen Dicarbonsäuren oder Diolen bzw. Polyolen in der Gewebeproduktion eingesetzt.

Polyesterschlichten sind beispielsweise aus der US-PS 3 546 008 und der US-PS 3 548 026 bekannt. Die Herstellung von Polyestern mit freien Carboxylgruppen nach einem zweistufigen Verfahren beschreibt die US-PS 4 268 645. In der ersten Stufe werden aromatische Dicarbonsäuren oder deren Ester mit mindestens einem Diol zu einem Präpolymeren mit einer Säurezahl von weniger als 4 kondensiert und in der zweiten Stufe das so erhaltene Präpolymere mit mindestens einer molekulargewichtserhöhenden Verbindung, z.B. Trimellitsäureanhydrid, zu Polyestern mit Säurezahlen von 15 bis 55 umgesetzt. Der Polyester wird in sec.-Butanol gelöst und mit einer Kombination aus Ammoniumhydroxid- und Natriumhydroxid-Lösung neutralisiert. Durch weitere Verdünnung mit Wasser entsteht eine 30 %ige Dispersion, die nach Anspruch 9 der US-PS 4 268 645 zum Schlichten von Polyester- und Polyester/Baumwoll-Kettgarn, also für Stapelfaserkettgarn, geeignet ist. Dispersionen, die sec.-Butanol enthalten, sind nicht problemlos zu verarbeiten. Außerdem sind die mit Ammoniak und Natrium-hydroxid neutralisierten Polyesterschlichten sehr klimaempfindlich und neigen, ohne weitere Zusätze auf Kettgarn eingesetzt, zu Verklebungen.

Zum Schlichten von Filamentkettgarn sind die genannten Produkte nicht geeignet, pur eingesetzt besitzen sie eine zu hohe Klimaempfindlichkeit. Die Schlichtefilme sind bei 65 % relativer Feuchtigkeit zu weich, bei 80 % relativer Feuchtigkeit sogar klebrig. Die Filamentgarnpräparation und übliche Flottenzusätze und/oder Nachölprodukte erzeugen eine weitere Erweichung und würden die Abriebfestigkeit bei Schlichtung von Filamentgarn stark beeinträchtigen.

Beim Assemblieren der Einzelbäume treten erhöhte Abzugskräfte auf, die von Defibrillierungen (Aufreißen des Filamentverbundes) begleitet sind. Nach längerer Lagerzeit verblocken die Kettbäume, weil die Kettfäden miteinander verkleben, so daß eine Weiterverarbeitung unmöglich ist. Die oben näher beschriebene Polyester-Dispersion ist daher auch nicht als Schlichtemittel für den Einsatz auf Wasserdüsenwebmaschinen geeignet.

Der Erfindung liegt die Aufgabe zugrunde, eine Polyesterdispersion zur Verfügung zu stellen, die als Schlichtemittel insbesondere für Filament geeignet ist und auf allen Webmaschinen verarbeitet werden kann. Das Schlichtemittel soll eine hohe Klebkraft aufweisen und auf den geschlichteten Fäden klimastabile, wasserfeste, abriebresistente und nicht blockende Filme ergeben.

Die Aufgabe wird erfindungsgemäß gelöst mit einem Verfahren zur Herstellung von wäßrigen Polyester-Dispersionen durch

a) Kondensieren von aromatischen Dicarbonsäuren oder deren Estern mit mindestens einem Diol zu Präpolymeren mit einer Säurezahl von 2 bis 8,

b) Umsetzung der Präpolymeren mit mindestens einer molekulargewichtserhöhenden Verbindung aus der Gruppe der Tricarbonsäuren, Ester der Tricarbonsäuren und Carbonsäureanhydride mit mindestens einer freien Carboxylgruppe zu Polyestern mit Säurezahlen von 40 bis 60 und

3

c) Dispergieren der Polyester in Wasser unter Bildung von wäßrigen Dispersionen,

wenn man zum Dispergieren des Polyesters der Polyesterschmelze wäßrige Mischungen aus Ammoniak und Aminen im Molverhältnis von 10:1 bis 1:10 oder zunächst bis etwa die Hälfte der erforderlichen Menge an Wasser zufügt, wobei die Polyesterschmelze bei Beginn der Zugabe eine Temperatur in dem Bereich von 150 bis 230°C aufweist und, falls zunächst nur Wasser zugegeben wurde, anschließend zu der dadurch abgekühlten Schmelze das Ammoniak/Amin-Gemisch und restliches Wasser zuführt. Die so erhältlichen teilweise oder vollständig neutralisierten Dispersionen von Polyestern sind Schlichtemittel für Filamentkettfäden, insbesondere für Filamentkettfäden aus Polyestern.

Die Herstellung der Polyester erfolgt durch einen zweistufigen Polykondensationsprozeß, der beispielsweise aus der US-PS 4 268 645 bekannt ist. In dem Verfahrensschritt a) wird zunächst ein Präpolymer mit einer Säurezahl von 2 bis 8 hergestellt, in dem man aromatische Dicarbonsäuren oder deren Ester mit mindestens einem Diol bei Temperaturen von 180 bis 240, vorzugsweise 230 bis 235°C kondensiert. Als aromatische Carbonsäuren kommen beispielsweise Terephthalsäure, Isophthalsäure und Tertiärbutylisophthalsäure in Betracht. Anstelle der Dicarbonsäuren können auch die Methyl- und Ethylester der Carbonsäuren, z.B. Terephthalsäuredimethylester eingesetzt werden. Eine Modifizierung der Präpolymeren ist außerdem dadurch möglich, daß man sulfonierte aromatische Dicarbonsäuren oder sulfonierte aromatische Dicarbonsäureester in Mischung mit den aromatischen Dicarbonsäuren bzw, Dicarbonsäureestern bei der Kondensation mitverwendet.

Die Menge an sulfonierten aromatischen Dicarbonsäuren bzw. Dicarbonsäureestern beträgt 0,5 bis 4 Mol.% der bei der Kondensation insgesamt eingesetzten aromatischen Carbonsäuren.

Als Diole kommen beispielsweise $\alpha,\omega$-Alkylenglykole mit 2 bis 12 Kohlenstoffatomen in Betracht, z.B. Ethylenglykol, 1,3-Propylenglykol, 1,2-Propylenglykol, Neopentylglykol, 1,4-Bis(hydroxymethyl)-cyclohexan, Polyalkylenglykole, wie Diethylenglykol, Triethylenglykol und Tetraethylenglykol. Vorzugsweise verwendet man Diethylenglykol und Mischungen aus Diethylenglykol und 1,4-Bis(hydroxymethyl)-cyclohexan im Molverhältnis 0,6 zu 0,4 bis 0,8 zu 0,2.

Die aromatischen Dicarbonsäuren und die Diole werden bei Temperaturen von 180 bis 240°C, vorzugsweise von 230 bis 235°C in einer Inertgasatmosphäre, z.B. Stickstoff, kondensiert. Bei Verwendung der Ester, z.B. Terephthalsäuremethylester, genügt bereits eine Reaktionstemperatur von 180 bis 200°C. In der Stufe a) zur Herstellung der Präpolymeren wird meistens ein geringer molarer Überschuß an Diol verwendet. Das Molverhältnis von Diol zu Dicarbonsäure bzw. Dicarbonsäureester beträgt 1,1 zu 1 bis 1,2 zu 1 und liegt vorzugsweise bei 1,16 zu 1. Das bei der Kondensation entstehende Wasser wird aus dem Reaktionsgemisch abdestilliert. Es muß allerdings dafür gesorgt werden, daß die Diole nicht zusammen mit dem bei der Reaktion entstehendem Wasser entfernt werden. Man destilliert daher das Wasser zweckmäßig über eine gut trennende Kolonne ab, so daß höher als Wasser siedende Bestandteile zurückgehalten werden. Die Kopftemperatur der Kolonne wird vorzugsweise in dem Bereich von 70 bis 95°C gehalten. Temperaturen von größer als 100°C sollen am Kopf der Kolonne vermieden werden. Die Polykondensation wird mit Hilfe der üblichen Veresterungs-bzw. Umesterungskatalysatoren durchgeführt, z.B. verwendet man dazu Alkalihydroxide oder Alkalialkoholate, organische Titanverbindungen, Salze von organischen Carbonsäuren, insbesondere aber organische Zinnverbindungen, wie Dibutylzinnoxid, Butylzinnsäure, Tetrabutylzinn und Butylchlorzinndihydroxid; organische Titanverbindungen, insbesondere Titanalkoholate, wie Titanisopropylat. Auch Erdalkalioxide und Erdalkalialkoholate sind als Katalysatoren für die Kondensationsreaktion geeignet. Außerdem kann man dafür noch Manganacetat oder Manganformiat einsetzen. Die Menge an Katalysatoren beträgt 0,05 bis 1 Gew.%, bezogen auf die Gesamtmenge der Komponenten.

Die Kondensation in der Reaktionsstufe a) wird soweit geführt, daß man ein Präpolymeres erhält, das eine Säurezahl von 1,5 bis 8, vorzugsweise 1,5 bis 4 aufweist. Die Säurezahl wird potentiometrisch bestimmt und der Zahlenwert gibt mg KOH/g Kondensat an.

Sobald man bei der Kondensation der aromatischen Dicarbonsäuren oder deren Ester mit mindestens einem Diol zu Präpolymeren gelangt, deren Säurezahl 2 bis 8 beträgt, wird die Temperatur des so erhaltenen Kondensationsprodukts auf etwa 160 bis 180°C erniedrigt. Während der Kondensation und vorzugsweise auch während des Abkühlens des Präpolymeren wird für eine gute Durchmischung der Reaktionsteilnehmer bzw. des Reaktionsprodukts gesorgt.

In der Verfahrensstufe b) erfolgt dann die Umsetzung der Präpolymeren mit mindestens einer molekulargewichtserhöhenden Verbindung aus der Gruppe der Tricarbonsäuren, Ester der Tricarbonsäuren und Carbonsäureanhydride mit mindestens einer freien Carboxylgruppe. Die so erhältlichen Polyester weisen als Endgruppen Carboxylgruppen auf. Zum Einführen dieser Carboxylgruppen in der Stufe b) der Kondensation verwendet man vorzugsweise Trimellitsäureanhydrid. Die Menge an Verbindungen, die gemäß b) zur Herstellung der Säureendgruppen enthaltenden Polyester eingesetzt wird, beträgt 10 bis 20 Mol.%, bezogen auf Gesamtmenge an Diol.

Die Kondensationsreaktion in der Stufe b) wird bei Temperaturen von etwa 180 bis 230°C, vorzugsweise 195 bis 205°C durchgeführt. Die Reaktionsmischung wird auch hierbei gerührt. Die Kondensation ist beendet, wenn das entstehende Reaktionsprodukt eine Säurezahl von 40 bis 60, vorzugsweise 45 bis 55 aufweist.

Das mittlere Molekulargewicht der mit Säuregruppen modifizierten Polyester beträgt vorzugsweise 150 000 bis 350 000 und liegt insbesondere in dem Bereich von 165 000 bis 200 000 (mittleres Molekulargewicht, bestimmt mit Hilfe der Lichtstreuung in Dimethylformamid als Lösemittel).

Gemäß Erfindung erfolgt das Dispergieren der gemäß b) erhältlichen Polyester zur Herstellung von wäßrigen Polyester-Dispersionen gemäß Verfahrensschritt c) dadurch, daß man zu der noch heißen Schmelze, die eine Temperatur in dem Bereich von 150 bis 210°C aufweist, wäßrige Mischungen aus Ammoniak und Aminen im Molverhältnis von 10 : 1 bis 1 : 10 zufügt. Auch das Dispergieren in der Verfahrensstufe c) erfolgt unter Durchmischen der Reaktionspartner. Die Mitverwendung eines Dispergiermittels ist dabei nicht erforderlich. Wasser wird in einer solchen Menge zugegeben, daß 10 bis 40 gew.%ige Polyester-Dispersionen entstehen. Die Mengen an Ammoniak und Amin werden so gewählt, daß man eine teilweise bis vollständige Neutralisation des gemäß b) erhaltenen Polyesters erreicht. Teilweise Neutralisation bedeutet beispielsweise einen Neutralisationsgrad von mindestens 70 % der Carboxylgruppen im Polyester. Ein Überschuß an Ammoniak/Amin ist zwar möglich, bringt jedoch bei der praktischen Anwendung der so erhältlichen wäßrigen Polyester-Dispersionen als Schlichtemittel keine Vorteile.

Die Zugabe der wäßrigen Mischung aus Ammoniak und Aminen in die Polyester-Schmelze wird bei Temperaturen der Schmelze in dem Bereich von 150 bis 210°C, vorzugsweise bei Temperaturen von 150 bis 200°C vorgenommen. Eine Temperatur von 150°C sollte jedoch nicht unterschritten werden, weil sonst die Gefahr besteht, daß keine feindisperse Verteilung des Polyesters in Wasser erhalten wird. Die Herstellung der wäßrigen Polyester-Dispersion aus der Schmelze kann auch so erfolgen, daß man zunächst bis etwa zur Hälfte der erforderlichen Menge an Wasser langsam zugibt, dann das Gemisch aus Ammoniak und Amin zufügt und erst zum Schluß die verbleibende Menge des Wassers zugibt. Bei der Zugabe von Wasser bzw. des wäßrigen Gemisches aus Ammoniak und Amin zu der Schmelze sinkt die Temperatur der Schmelze. Das der Schmelze bei einer Temperatur von 150 bis 200°C zugesetzte Wasser kann gegebenenfalls auf Temperaturen erhitzt sein, die nahe am Siedepunkt des Wassers liegen. Üblicherweise fügt man zu der Schmelze Wasser mit einer Temperatur von 10 bis 95°C zu. Die wäßrige Mischung aus Ammoniak und Aminen, die zu der heißen Schmelze zugegeben wird, kann Temperaturen in dem Bereich von 10 bis 40°C haben. Üblicherweise beträgt die Temperatur der Komponenten, die der Schmelze zugesetzt werden, 10 bis 25°C. Nach Beendigung des Eintrags des Ammoniak/Amin/Wasser-Gemisches beträgt die Temperatur der Mischung 70 bis 100°C. Die so erhaltene Polyester-Dispersion wird noch 2 bis 12, vorzugsweise 4 bis 6 Stunden bei einer Temperatur von 95 bis 35°C gerührt und dann auf Umgebungstemperatur abgekühlt.

Ammoniak wird üblicherweise in Form der konzentrierten wäßrigen Lösung eingesetzt. Obwohl sämtliche Amine eingesetzt werden können, werden einige wegen ihrer problemlosen Handhabung bevorzugt. Zu diesen Aminen gehören beispielsweise Diethylethanolamin, Triethanolamin, Methyldiethanolamin, Dimethylethanolamin, Dibutylethanolamin, Butyldiethanolamin, Diisopropanolamin und Triisopropanolamin. Von den genannten Aminen verwendet man vorzugsweise Triethanolamin.

Das molare Verhältnis von Ammoniak zu Amin beträgt 10 : 1 bis 1 : 10 und liegt vorzugsweise in dem Bereich von 1 : 1 bis 6,5 : 3,5. Besonders bevorzugt sind wäßrige Mischungen aus Ammoniak und Triethanolamin im Molverhältnis 3 : 1 bis 1 : 2.

Man erhält in der Stufe c) wäßrige Polyester-Dispersionen mit einem Feststoffgehalt von 10 bis 40 Gew.% und einer Größe der dispergierten Polyester-Teilchen von ≦1 μm. Die Dispersion sollte sich nahezu rückstandslos durch ein Baumwollfilter-Batist filtrieren lassen. Die so erhältlichen Polyesterdispersionen werden als Schlichtemittel zum Schlichten von Filamentkettfäden verwendet, insbesondere zum Schlichten von Filamentkettfäden aus Polyester. Ein Verweben von Filamentgarn, das aus zahlreichen endlosen Einzelfilamenten besteht, zu Textilgut ist nur dann möglich, wenn das Kettgarn vor dem Verweben mit einem Schlichtemittel behandelt wird, das die Aufgabe hat, die Einzelfilamente bei den hohen mechanischen Beanspruchungen des Webens zusammenzuhalten und damit Fadenbrüche und Knötchenbildung durch Filamentaufschübe sowie Fadenabrieb zu vermeiden.

Ein Maß für die Güte einen Schlichte in bezug auf den Schutz und die Stabilisierung des Fadens ist der Fadenschluß. Er kann mit dem Shirley-Filamentcounter bestimmt werden. Der Filamentfaden wird vor und nach dem Schlichten durchgeschnitten. Aus den beim Schneiden gezählten Impulsen läßt sich die Anzahl der freien, unverklebten Einzelfilamente berechnen. Der Rohgarnwert wird gleich 100 gesetzt, d.h. 100 % der Einzelfilamente sind unverklebt. Nach dem Schlichten findet man einen deutlich geringeren Anteil nicht verklebter Filamente. Bei einer guten Schlichte sollte dieser Anteil zwischen 10 und 25 % liegen, je nach Garntyp.

In der Literatur findet man diese Zahlen als Manra-Werte. Manrawert 12 bedeutet z.B., nur 12 % der ursprünglichen mit dem Shirley-Filamentcounter bestimmten Einzelfilamente sind an der Schnittstelle nicht miteinander verklebt. Bis vor wenigen Jahren begnügte man sich noch mit der Angabe dieser Manrawerte beim Vergleich der Güte von verschiedenen Schlichten. Inzwischen sind die mechanischen Beanspruchungen beim Weben durch die modernen Hochleistungswebmaschinen enorm gestiegen. Die Qualität der Schlichteprodukte hat derart zugenommen, daß mit Hilfe der einfachen Manrawerte kaum noch eine Unterscheidung möglich ist. Daher werden heute die geschlichteten Garne vor der Messung mit dem Reutlinger Webtester mechanisch beansprucht. Der Reutlinger Webtester simuliert den Webvorgang.

Die Kombination Webtester mit Shirley Filamentcounter ergibt Prüfergebnisse, die praxisgerechte Voraussagen über das Webverhalten eines geschlichteten Kettgarnes zulassen.

Je niedriger in genannten Testverfahren, bei möglichst geringer Schlichtemittelauflage, die Manrawerte sind, desto besser ist der Fadenschluß und die Fadenhaftung und damit der erzielbare Webnutzeffekt.

Im folgenden Text bedeutet die Bezeichnung MO, daß dieser Manrawert vor Beanspruchung des Filamentkettgarnes auf dem Webtester gemessen wurde. M 200 gibt an, daß das Garn vor der Messung mit dem Filamentcounter auf dem Webtester 200 Beanspruchungszyklen ausgesetzt war.

Ein brauchbares Schlichtemittel ergibt unter diesen Umständen mindestens einen Manrawert von 50. Je geringer die Differenz zwischen MO und M 200, desto besser ist die Klebkraft und der Fadenschluß durch das Schlichtemittel.

Ein gutes Schlichtemittel muß jedoch nicht nur einen guten Fadenschluß und die mechanische Stabilisierung des Kettgarnes bewirken, sondern hat noch zahlreiche andere, spezielle Eigenschaften aufzuweisen, damit seine Verwendung nicht zu Betriebsstörungen führt.

Die Schlichte darf keinen klebrigen Abrieb an metallischen Fadenführungsorganen ergeben, der geschlichtete Faden soll eine möglichst geringe Metallreibung aufweisen und weder mit anderen geschlichteten Fäden noch Apparateteilen verkleben. Sie muß im ausreichenden Maße in Wasser löslich oder dispergierbar sein und die gebrauchsfertigen, wäßrigen Lösungen oder Dispersionen dürfen nicht zur Hautbildung neigen, da die Häute zu hartnäckiger Verschmutzung und Verklebung der Fäden und damit letztlich zu Betriebsstörungen führen. Besonders wichtig ist es, daß die Schlichte nach dem Webvorgang durch Waschen vollständig vom Textilmaterial entfernt werden kann. Diese Forderung ist eine Voraussetzung für eine störungsfreie Weiterverarbeitung z.B. für das Färben.

Zur Prüfung ob ein Schlichtemittel durch Klimaeinfluß mechanisch negativ beeinflußt wird und zur Bildung von Abrieb neigt, gibt es schnell durchführbare Vortests:

1. Beurteilung der Schlichtefilme nach Wasserlagerung bei verschiedenen Temperaturen oder in Klimakammern bei 65 und 80 % relativer Feuchtigkeit und

2. zahlenmäßige Erfassung des mechanischen Niveaus durch Bestimmung der Pendelhärte nach 24 Stunden Lagerung der Filme bei 65 und 80 % relativer Feuchtigkeit.

Als Richtwert, in Übereinstimmung mit Praxisergebnissen, kann gelten, daß die Pendelhärte bei 65 % relativer Feuchtigkeit nicht unter 20 und bei 80 % relativer Feuchtigkeit nicht unter 10 liegen sollte. Andernfalls ist die Schlichte nicht water-jet-geeignet, die Garnlagen auf den Kettbäumen verkleben (blocken) mit zunehmender Lagerung und beim Weben gibt es Abrieb sowie mechanische Störungen.

Wasserdüsenwebstuhl geeignete Schlichten sollten unter den Bedingungen, 80°C, 2 g/l Soda, 1 g/l eines guten Netzmittels bei guter Waschmechanik durch einen Kurzzeitprozeß vollständig auswaschbar sein. Bei Verwendung von 2 g/l Soda kann man bei der Prüfung der Auswaschbarkeit des Schlichtemittels auch mit Waschwasser etwas höherer natürlicher Härte arbeiten.

Die Polyester-Dispersionen, die gemäß vorliegender Erfindung als Schlichtemittel verwendet werden, erfüllen die oben genannten Anforderungen.

(Literatur: Melliand Textilberichte 67, 270 (1987), M.S. Kellon, C. Pividori, M. Alphonsus, "Entschlichten der wichtigsten Schlichtefamilien auf Polyesterfilamentgarnen, speziell der wasserdispergierbaren Polyesterschlichten").

Beispiel 1:

In einem trockenen 1-Liter-Vierhalskolben mit Rührer, Thermometer. Gaseinleitungsrohr und Vigreuxkolonne mit aufgesetztem Rückflußkühler werden unter Stickstoff-Atmosphäre 68,9 g (0,65 mol) Diethylenglykol und 50,5 g (0,35 mol) Cyclohexandimethanol (= 1.4-Bis(hydroxymethyl)-cyclohexan) vorgelegt und auf 80°C erwärmt. Bei dieser Temperatur gibt man 121,2 g (0,73 mol) Isophthalsäure und 21.6 g (0,13 mol) Terephthalsäure zu und erwärmt auf 135°C. Hierzu werden noch 0,1 % (0,3 g) Butylzinnsäure als Katalysator zugesetzt. Es wird nun langsam auf 230°C erwärmt. Die Reaktionstemperatur verbleibt solange bei 230 - 235°C bis der entstehende Polyester eine Säurezahl von 1,5 - 3 mg KOH/g erreicht hat. Nachdem die vorgenannte Säurezahl erreicht ist, läßt man auf 200°C abkühlen und fügt 28,8 g (0,15 mol) Trimellitsäureanhydrid zu. Die Reaktionsmischung wird nun solange bei 200° - 205°C gerührt, bis es eine Säurezahl von 50 mg KOH/g aufweist. In die heiße Schmelze wird nun sehr langsam das Gemisch von 600 g Wasser, 10,4 g (0,11 mol) Triethanolamin und 9,1 g (0,134 mol) Ammoniak (25 %ig) eingerührt. Die Temperatur fällt ab und wird bei 90°C gehalten. Man rührt vier Stunden bei 90°C, kühlt danach die etwa 30 %ige Polyesterdispersion auf Raumtemperatur ab. Die durchschnittliche Größe der dispergierten Teilchen der Dispersion betrug <1 μm. Der Neutralisationsgrad des dispergierten Polyesters betrug 100 %.

Beispiel 2:

Es wurde gemäß Beispiel 1 mit den Ausnahmen verfahren, daß man Terephthalsäure durch Terephthalsäuredimethylester ersetzte und die Kondensationstemperatur von 230° - 235°C auf 200° - 205°C erniedrigte. Man gelangte bei einem Neutralisationsgrad von 100 % zu einer Polyesterdispersion mit sehr ähnlichen Eigenschaften wie unter Beispiel 1. Die durchschnittliche Teilchengröße der dispergierten Teilchen betrug <1 μm.

Beispiel 3:

Es wurde gemäß Beispiel 1 verfahren, jedoch erfolgte die Herstellung der Polyesterdispersion derart, daß zunächst die Hälfte des Wassers bei 200°C, dann bei 100°C das Ammoniak/Amin-Gemisch und anschließend das restliche Wasser eingerührt wurde. Die durchschnittliche Teilchengröße des dispergierten Polyesters betrug <1 μm, der Neutralisationsgrad 100 %.

Beispiel 4:

In Tabelle 1 werden die Eigenschaften von geschlichteten Kettfäden angegeben, die mit Polyester-Dispersionen geschlichtet wurden, zu deren Herstellung man das im Beispiel 1 beschriebene Kondensationsprodukt jeweils bei 200°C mit den in Tabelle 1 genannten Ammoniak/Amin-Mischungen behandelte. Der Neutralisationsgrad betrug 100 %.

Tabelle 1

| | Ammoniak/Amin [a] | Pendelhärte [b] | | Manrawerte [c] | |
|---|---|---|---|---|---|
| | | 65 | 80 | MO | M 200 |
| | | % rel. Feuchtigkeit | | | |
| Polyesterdispersion A | Ammoniak/Triethanolamin | 41 | 20 | 13 | 18 |
| B | Ammoniak/Tetramethylethylendiamin | 42 | 21 | 13 | 44 |
| C | Ammoniak/Methyldiethanolamin | 26 | 17 | 14 | 24 |
| D | Ammoniak/Butyldiethanolamin | 20 | 12 | 15 | 32 |
| E | Ammoniak/Diethylethanolamin | 28 | 19 | 21 | 35 |

a) Molverhältnis Ammoniak/Amin 1:1
b) Bestimmung der Pendelhärte nach König
c) Manrawerte bei 6 % Auftrag auf Polyester glatt dtex 50f18, berechnet durch lineare Regression aus mindestens drei verschiedenen Auftragsmengen, zwischen 3 und 8 Gew.%.

Tabelle 2

| Polyesterdispersion | Molverhältnis $NH_3/N(CH_2CH_2OH)_3$ | Pendelhärte bei 65 % | 80 % rel. Feuchtigkeit | Manrawerte [c] MO | M200 |
|---|---|---|---|---|---|
| Herstellung | 1 : 1 | 24 | 10 | 10 | 18 |
| nach | 5,5 : 4,5 | 41 | 20 | 13 | 18 |
| Beispiel 1 | 6 : 4 | 41 | 20 | 15 | 30 |
| jedoch | 6,5 : 3,5 | 52 | 27 | 15 | 32 |
| unterschiedlich | | | | | |

neutralisiert, die Temperatur der Schmelze bei Beginn der Zugabe betrug jeweils 200°C, der Neutralisationsgrad des dispergierten Polyesters betrug 100 %.

Aus Tabelle 2 kann der direkte Einfluß des Mischungsverhältnisses Ammoniak/Amin bezüglich Pendelhärte und Manrawerte abgelesen werden.

Aus den Tabellen ist deutlich ersichtlich, daß die Polyesterdispersion durch entsprechende Abmischung Ammoniak/Amin gezielt auf bestimmte, gewünschte anwendungstechnische Eigenschaften eingestellt werden kann.

Beispiel 5:

Es wurde gemäß Beispiel 1 mit der Ausnahme verfahren, daß Isophthalsäure durch 3 Mol.% Sulfoisophthalsäure ersetzt wurde. Das löslichmachende Prinzip der erhaltenen Polyesterdispersionen basiert nun auf einer Mischung der Sulfogruppe sowie der Carboxylgruppe im Polyester. Die so erhaltenen Polyesterdispersionen zeigen ebenfalls gute Eigenschaften und sind water-jet-tauglich.

Die enge Verknüpfung zwischen Auswahl der Bausteine für das Polyesterkondensationspolymer, Kondensationsgrad und Kondensationsverfahren, Verfahrensweise bei der Dispersionsherstellung, Wahl der Neutralisationskomponente wird erst durch die anwendungstechnische Prüfung bzw. beim Schlichten von Polyesterfilamentgarn, insbesondere glattem Garn, in der Praxis deutlich.

Die US-PS 4.268.645 beschreibt zwar die Herstellung von Polyesterschlichten aus den gleichen Bausteinen, jedoch erhält man nach keinem der genannten Beispiele eine anwendungstechnisch brauchbare Polyesterschlichte für Filament. Außerdem ist eine gewünschte Klimastabilität nicht gegeben.

8

EP 0 332 980 B1

Vergleichsbeispiel 1:

Gemäß US-PS 4 268 645, Beispiel 1 wird ein Polyester aus Isophthalsäure, Diethylenglykol (6 + 7 Mol) und 1,05 Mol Trimellitsäureanhydrid mit einer Säurezahl von 42 - 45 hergestellt und mit sec.-Butanol, $NH_4OH/NaOH$ und Wasser in eine Dispersion mit einem Feststoffgehalt von 29 % überführt. Der Neutralisationsgrad betrug 100 %.

Vergleichsbeispiel 2:

Gemäß der US-PS 3 546 008 wird durch Kondensieren von Isophthalsäure, Terephthalsäure und Diethylenglykol im molaren Verhältnis von 1,02 : 0,18 : 1,40 und 0,21 Mol Trimellitsäureanhydrid ein Polyester mit einer Säurezahl von 43,5 hergestellt. Das Produkt wurde gemahlen und mit Triethylamin und Wasser in Dispersion gebracht (Feststoffgehalt der Dispersion betrug 32,5 %; der Neutralisationsgrad 100 %).

Vergleichsbeispiel 3

Isophthalsäure, Terephthalsäure, Diethylenglykol, 1,4-Cyclohexandimethanol werden im molaren Verhältnis von 1,02 : 0,18 : 0,91 : 0,49 mit 0,21 Mol Trimellitsäureanhydrid zu einem Polyester mit einer Säurezahl von 45,9 kondensiert.
Das Produkt wurde gemahlen und mit Triethylamin und Wasser in eine 30 %ige Dispersion (Neutralisationsgrad 100 %) gebracht.

Tabelle 3

| Polyesterdispersion gemäß Vergleichsbeispiel | Pendelhärte bei 65/80 % rel. Feuchtigkeit | Filmbeurteilung nach Wasserlagerung bei 22°C |
|---|---|---|
| 1 | 11/3 | klebrig, schmiert ab |
| 2 | 2/2 | läuft weiß an, extrem dehnfähig |
| 3 | 13/4 | läuft weiß an, klebrig nach 60 min starke Beeinträchtigung der mechan. Festigkeit |

Alle drei Schlichtefilme besitzen zusätzlich eine geringe thermische Stabilität: Schmelzklebereffekt, die Filme beginnen bereits bei Temperaturen unter 80°C zu fließen. Dies würde zwangsläufig Probleme an den Trockenzylindern der Schlichtemaschine hervorrufen.
Ein Härtetest, nämlich die Wasserlagerung der Filme bei 50°C macht zudem die Wasserunempfindlichkeit der erfindungsgemäßen Produkte im Vergleich zu Produkten nach dem Stand der Technik deutlich (vgl. Tabelle 4)

Tabelle 4

Wasserlagerung bei 50°C von geschlichteten Kettfäden,
die mit einer Polyester-Dispersion geschlichtet sind, die
erhalten wurden gemäß

| Schlichte | Vergleichsbeispiel | | | Beispiel 1 |
|---|---|---|---|---|
| | 1 | 2 | 3 | |
| pH-Wert nach 10 min. | 7,3 | 7,2 | 5,1 | 6,0 |
| Film nach 5 min. | gequollen | stark ge-quollen | klar gelöst | dehnfähiger intakter Film |
| Film nach 10 min. | zerfallen in Gelpar-tikel | zerfallen in Gelpar-tikel | klar gelöst | dehnfähiger intakter Film zähklebrig |

Nur das gemäß Vergleichsbeispiel 1 erhaltene Produkt gilt, zumindest unter Klimabedingungen im nordeuropäischen Raum, als Wasserwebmaschinen geeignet. Die Produkte gemäß den Vergleichsbeispielen 2 und 3 sind zu wasser- bzw. klimaempfindlich. Die Schlichte entsprechend Beispiel 1 ist allen anderen Produkten überlegen.

**Patentansprüche**

1. Verfahren zur Herstellung von wäßrigen Polyester-Dispersionen durch
   (a) Kondensieren von aromatischen Dicarbonsäuren oder deren Estern mit mindestens einem Diol zu Präpolymeren mit einer Säurezahl von 2 bis 8,
   (b) Umsetzung der Präpolymeren mit mindestens einer molekulargewichtserhöhenden Verbindung aus der Gruppe der Tricarbonsäuren, Ester der Tricarbonsäuren und Carbonsäureanhydride mit mindestens einer freien Carboxylgruppe zu einem Polyester mit einer säurezahl von 40 bis 60 und
   (c) Dispergieren des Polyesters in Wasser unter Bildung von wäßrigen Dispersionen,
   dadurch gekennzeichnet, daß man zum Dispergieren des Polyesters der Polyesterschmelze wäßrige Mischungen aus Ammoniak und Aminen im Molverhältnis von 10:1 bis 1:10 oder zunächst bis etwas die Hälfte der erforderlichen Menge an Wasser zufügt, wobei die Polyesterschmelze bei Beginn der Zugabe eine Temperatur in dem Bereich von 150 bis 230 °C aufweist und, falls zunächst nur Wasser zugegeben wurde, anschließend zu der dadurch abgekühlten Schmelze das Ammoniak/Amin-Gemisch und restliches Wasser zuführt.

2. Verfahren nach Anspruch 1, dadurch gekennzeichnet, daß man zu der Schmelze der Polyester zunächst Wasser und danach eine wäßrige Lösung einer Mischung aus Ammoniak und Aminen zufügt.

3. Verfahren nach den Ansprüchen 1 und 2, dadurch gekennzeichnet, daß man wäßrige Mischungen aus Ammoniak und Triethanolamin im Molverhältnis 3 : 1 bis 1 : 2 einsetzt.

4. Verwendung der nach den Ansprüchen 1 bis 3 erhältlichen Polyesterdispersionen als Schlichtemittel zum Schlichten von Filamentkettfäden.

5. Verwendung nach Anspruch 4, dadurch gekennzeichnet, daß man Filamentkettfäden aus Polyester schlichtet.

**Claims**

1. A process for preparing an aqueous polyester dispersion by
   (a) condensing an aromatic dicarboxylic acid or ester with at least one diol to give a prepolymer having an acid number of from 2 to 8,
   (b) reacting the prepolymer with at least one molecular weight enhancer compound from the group of the tricarboxylic acids, esters of tricarboxylic acids and carboxylic anhydrides having at least one free carboxyl group to give a polyester having an acid number of from 40 to 60, and
   (c) dispersing the polyester in water to form an aqueous dispersion,
   which comprises dispersing the polyester by adding an aqueous mixture of ammonia and an amine in a molar ratio of from 10 : 1 to 1 : 10 to a melt of the polyester or by initially adding thereto up to approximately half the required amount of water, the polyester melt having a temperature within the range from 150 to 230°C at the start of the addition, and, if initially only water was added, adding the ammonia/amine mixture and the rest of the water to the melt as cooled down by the initial water.

2. A process as claimed in claim 1, wherein the melt of the polyester is admixed first with water and then with an aqueous solution of a mixture of ammonia and an amine.

3. A process as claimed in either of claims 1 and 2, wherein an aqueous mixture of ammonia and triethanolamine in a molar ratio of 3 : 1 to 1 : 2 is used.

4. Use of the polyester dispersion obtainable as claimed in any of claims 1 to 3 as a size for sizing filament warp yarns.

5. Use as claimed in claim 4, whereby polyester filament warp yarns are sized.

**Revendications**

1. Procédé de Préparation de dispersions de polyester aqueuses par
   (a) condensation de diacides carboxyliques aromatiques ou de leurs esters avec au moins un diol en prépolymères ayant un indice d'acide de 2 à 8,
   (b) réaction des prépolymères avec au moins un composé augmentant le poids moléculaire choisi parmi les triacides carboxyliques, les esters de triacides carboxyliques et les anhydrides d'acides carboxyliques ayant au moins un groupe carboxyle libre, en un polyester ayant un indice d'acide de 40 à 60 et
   (c) dispersion du polyester dans l'eau par formation de dispersions aqueuses,
   caractérisé en ce que, pour disperser le polyester, on ajoute à la masse fondue du polyester des mélanges d'ammoniac et d'amines dans un rapport molaire de 10:1 à 1:10, ou en ce que l'on ajoute en premier lieu une quantité allant jusqu'à la moitié de la quantité nécessaire d'eau, la masse fondue du polyester étant, au début de l'ajout, à une température de 150 à 230°C et, dans le cas où l'on n'ajoute que de l'eau en premier lieu, en ce que l'on introduit ensuite dans la masse fondue ainsi refroidie le mélange ammoniac/amine et le reste d'eau.

2. Procédé selon la revendication 1, caractérisé en ce que l'on ajoute en premier lieu de l'eau à la masse fondue du polyester, puis une solution aqueuse d'un mélange d'ammoniac et d'amines.

3. Procédé selon la revendication 1 ou 2, caractérisé en ce que l'on introduit des mélanges aqueux d'ammoniac et de triéthanolamine dans un rapport molaire de 3:1 à 1:2.

4. Utilisation des dispersions de polyester obtenues selon l'une des revendications 1 a 3 comme agent d'encollage pour l'encollage de fils de chaîne de filaments.

5. Utilisation selon la revendication 4, caractérisée en ce que l'on encolle de polyester des fils de chaîne de filaments.